# EUROPÄISCHE PATENTSCHRIFT

(11) **EP 2 349 717 B1**
(45) Veröffentlichungstag und Bekanntmachung des Hinweises auf die Patenterteilung: **13.01.2016**
(21) Anmeldenummer: 09747856.4
(22) Anmeldetag: 06.11.2009
(51) Int. Cl.: B32B 37/10, B32B 37/20, B29C 70/30

(54) **VERFAHREN ZUR HERSTELLUNG EINER PLATTE UND DANACH HERGESTELLTE PLATTE**
METHOD FOR PRODUCING A SHEET AND SUBSEQUENTLY PRODUCED SHEET
PROCÉDÉ DE FABRICATION D'UNE PLAQUE, ET PLAQUE FABRIQUÉE PAR CE PROCÉDÉ

(30) Priorität: 20.11.2008 DE 102008058345
(43) Veröffentlichungstag der Anmeldung: 03.08.2011
(73) Patentinhaber: Fritz Egger GmbH & Co. OG, 6380 St. Johann in Tirol (AT)
(72) Erfinder: SCHIEGL, Walter, A-6380 St. Johann in Tirol (AT)
(74) Vertreter: Cohausz & Florack
(86) Internationale Anmeldenummer: PCT/EP2009/064775
(87) Internationale Veröffentlichungsnummer: WO 2010/057787

(56) Entgegenhaltungen:
- EP-A1- 1 666 247
- WO-A1-2008/075910
- DE-A1- 10 124 710
- DE-A1- 19 946 928
- JP-A- 2 006 131
- US-A- 5 662 761

## Beschreibung

Die Erfindung betrifft ein zweistufiges Verfahren zur Herstellung einer Schichtstoffplatte, bei dem eine Grundplatte und eine Beschichtung separat hergestellt werden, wobei nacheinander die folgenden Schritte durchgeführt werden:
- Bereitstellen einer Mehrzahl von mit einer Imprägnierung versehenen, nicht miteinander verpressten Zellulosefaserbahnen,
- Bilden einer Schichtung,
- Einfahren der Schichtung in eine Heißpresse,
- Verpressung der Schichtung unter Erhöhen des Drucks und der Temperatur zu einer Grundplatte mit einer Dicke von 2 mm und mehr,
- Ausfahren der Grundplatte aus der Heißpresse und
- Beschichten der Grundplatte.

Ein entsprechendes Verfahren ist beispielsweise aus der US 5,662,761 bekannt. Bei dem bekannten Verfahren werden Leiterplatten hergestellt, indem eine Schichtung aus Faserbahnen und dazwischenliegenden Schichtstoffplatten erzeugt und verpresst wird. Die Schichtstoffplatten werden in einem vorangehenden, separaten Arbeitsschritt hergestellt, wodurch dieses Verfahren relativ aufwendig ist.

Aus dem Stand der Technik bekannte Schichtstoffplatten bestehen aus einer Mehrzahl von mit Phenolharz getränkten Lagen von Kernpapieren, auf deren zumindest einer Seite ein mit Melaminharz imprägniertes Dekorpapier vorgesehen ist, wobei die so geschichteten Lagen unter erhöhtem Druck und bei erhöhter Temperatur zu einer kompakten Platte verpresst sind. Zur Erhöhung der Verschleißfestigkeit kann auf dem Dekorpapier noch eine transparente Papierlage, das so genannte Overlaypapier, vorgesehen sein. Dieses kann bei erhöhten Anforderungen hinsichtlich Abriebbeständigkeit und/oder Kratzbeständigkeit auch mit Hartpartikeln, beispielsweise aus Korund (α-Al₂O₃), ausgerüstet sein.

Die grundlegenden Eigenschaften, Prüfvorschriften und Anforderungen an diese so genannten dekorativen Hochdruck-Schichtpressstoffplatten (HPL) sind in den Europäischen Normen EN 438 Teil 1 bis 7 definiert. Es wird hier wesentlich nach den Dicken von 2 mm und größer bzw. kleiner 2 mm unterschieden. Letztere sind zum Verkleben mit einem Trägermaterial vorgesehen, während Platten größer 2 mm in der Regel auch ohne Trägermaterial, also selbsttragend, eingesetzt werden. Die vorliegende Erfindung bezieht sich bevorzugt auf Schichtpressstoffplatten, auch Schichtstoffplatten genannt, und deren Herstellung mit einer Dicke von 2 mm und größer, sie ist aber nicht auf diese beschränkt.

Der Einsatzbereich von Schichtstoffplatten ist sehr vielfältig. So werden diese als so genannte Schichtstoffe heute verbreitet im Möbelbau als Beschichtung für höher beanspruchte Oberflächen wie Arbeitsplatten oder Kanten eingesetzt, als so genannte Compactplatten aber auch als selbst tragende Tischplatten, Zwischenwände oder Wandverkleidungen. Aber auch im Außenbereich, beispielsweise zur Verkleidung von Fassaden, ist deren Anwendung sehr verbreitet.

Zur Herstellung von Hochdruck-Schichtpressstoffplatten werden mit Phenolharz imprägnierte Kraftpapiere zur Bildung eines Kerns und mit Melaminharz imprägnierte Dekorpapiere zur Bildung einer dekorativen Oberfläche geschichtet und unter erhöhter Temperatur miteinander verpresst. Die dabei angewandten Temperaturen bewegen sich in der Regel im Bereich von 130°C, bei spezifischen Pressdrücken von 8 bis 10 MPa. Üblicherweise werden bei der Herstellung von Schichtstoffplatten Rückkühlpressen eingesetzt, die vor dem Öffnen der Presse die Platten abkühlen, um den aufgrund der enthaltenen Restfeuchte bei hohen Temperaturen vorliegenden Dampfdruck zu verringern. Ein überhöhter Dampfdruck in der Platte würde im Moment des Öffnens der Presse sonst zum Platzen derselben führen. Pressen, die eine Rückkühlung des Pressgutes erlauben, sind allerdings sehr teuer in Ihrer Anschaffung und unterliegen zudem aufgrund der oftmaligen Temperaturwechsel sehr hohen thermischen Belastungen, was sich negativ auf deren Lebensdauer auswirkt.

Melaminharze weisen eine geringere Wärmestabilität als Phenolharze auf. Bei hohen Presstemperaturen können so Verfärbungen der mit Melaminharz imprägnierten Dekore auftreten. Man spricht in diesem Zusammenhang auch von Vergilben. Die Presstemperatur ist damit auch aus diesem Grund beschränkt.

Zur Vermeidung des beschriebenen Dampfstoßeffekts ist in der DE 25 46 115 A1 vorgeschlagen worden, an der dem Dekor abgewandten Seite eines zu verpressenden Lagenstapels eine poröse, dampfdurchlässige Schicht, vorzusehen.

Es ist daher die Aufgabe der vorliegenden Erfindung, ein Verfahren zur Herstellung einer Schichtstoffplatte und eine entsprechende Schichtstoffplatte bereitzustellen, womit auf möglichst einfache Weise eine optimale Qualität der Platte gewährleistet ist.

Die zuvor hergeleitete und aufgezeigte Aufgabe wird gemäß einer ersten Lehre der vorliegenden Erfindung gelöst durch ein Verfahren zur Herstellung einer Schichtstoffplatte mit den Merkmalen von Patentanspruch 1. Die Aufgabe wird also bei einem Verfahren der eingangs genannten Art dadurch gelöst, dass die Schichtung gebildet wird, indem die mit der Imprägnierung versehenen Zellulosefaserbahnen übereinander angeordnet werden, wobei die Schichtung aus den Zellulosefaserbahnen in die Heißpresse eingefahren und unter Erhöhen des Drucks und der Temperatur zu der Grundplatte mit der Dicke von 2 mm und mehr verpresst wird, wobei nach dem Beschichten eine Compactplatte gemäß Europäischer Norm EN 438 erhalten wird.

Ferner wird die Aufgabe gemäß einer zweiten Lehre der vorliegenden Erfindung gelöst durch eine Schichtstoffplatte mit den Merkmalen von Patentanspruch 12. Die Aufgabe wird also gelöst durch eine Compactplatte gemäß Europäischer Norm EN 438, hergestellt durch ein wie zuvor beschriebenes Verfahren, enthaltend
- eine Grundplatte einer Dicke von 2 mm und mehr mit einer Mehrzahl von mit einer Imprägnierung versehenen, übereinander angeordneten und unter erhöhtem Druck und erhöhter Temperatur verpressten Zellulosefaserbahnen und
- eine zumindest auf einer Seite der Grundplatte separat aufgebrachte Beschichtung.

Vorteilhafte Ausgestaltungen des erfindungsgemäßen Verfahrens und der erfindungsgemäßen Schichtstoffplatte sind Gegenstand der Unteransprüche und werden im Folgenden detailliert beschrieben.

Der ganz wesentliche Punkt im Unterschied zum Stand der Technik besteht darin, dass die Schichtstoffplatte durch einen 2-stufigen Prozess hergestellt wird. Das produzieren des Grundkörpers bzw. der Grundplatte und die Beschichtung erfolgen separat. Damit sind zwar Nachteile wegen des zusätzlichen Beschichtungsvorganges gegeben, die aber durch die so mögliche raschere Produktion des Grundkörpers mehr als kompensiert werden. Zusätzlich ergibt sich so nicht mehr die Beschränkung auf die Beschichtung im Wege eines Dekorpapiers, sondern es können beinahe beliebig viele sonstige, bekannte Beschichtungsverfahren angewendet werden. Eventuell können entsprechende Vorbehandlungen durch Schleifen, Glätten, insbesondere Thermoglätten, und/oder die Applikation von Vorstrichen, Primern und/oder Grundierungen erfolgen. Für ausgewählte Beschichtungen kann auch eine Plasmabehandlung der Oberflächen günstig sein. Auch kann es bei verschiedenen Beschichtungen von Vorteil sein, wenn die Schichtung, aus der die Grundplatte gebildet wird, mindestens eine Zellulosefaserbahn ohne Imprägnierung aufweist, vorzugsweise derart, dass die Schichtung auf einer Seite und/oder auf beiden Seiten mit einer äußeren Lage versehen wird, die von mindestens einer Zellulosefaserbahn ohne Imprägnierung gebildet wird. Auf diese Weise wird eine bessere Haftung einer Beschichtung gewährleistet.

Die verringerte Presszeit solcherart hergestellter Schichtpressstoffe ergibt sich einerseits durch das fehlen eines mit Melaminharz imprägnierten Dekorpapiers und der damit möglichen, höheren Presstemperatur von 155°C, bevorzugt von über 185°C, besonders bevorzugt von über 205°C. Solch hohe Presstemperaturen würden bei mit Melaminharz imprägnierten Dekorpapieren zu Verfärbungen/Vergilbungen führen, womit diese Produkte unbrauchbar würden.

Ein weiterer Vorteil liegt in der Möglichkeit, die Grundplatte vor dem Beschichten zu schleifen, womit sich wesentlich geringere Dickentoleranzen, als bei herkömmlichen Schichtpressstoffen, ergeben. Darüber hinaus ist dieser Umstand vor allem auch deswegen äußerst vorteilhaft, weil so auf teure Pressbleche verzichtet werden kann. Für eine Laminatoberfläche sind nur hochwertigste, wartungsintensive Pressbleche, die wiederkehrend gereinigt und von Zeit zu Zeit auch aufgearbeitet, sprich neu verchromt werden müssen, einsetzbar, um eine geschlossene Oberfläche mit dem gewünschten Glanzgrad und der gewünschten Struktur zu erzielen. Auf diese hochwertigen und Wartungsintensiven Pressbleche kann durch den 2-stufigen Prozess verzichtet werden.

Eine zusätzliche, wirkungsvolle Maßnahme zur Verringerung der Presszeit ergibt sich aus der Möglichkeit, eine poröse, wasserdampfdurchlässige Schicht an einer oder beiden Seiten der Schichtung, also zwischen Grundkörper und Pressblechen, vorzusehen. Die sich damit ergebende Oberflächenrauhigkeit des fertigen Grundkörpers kann im Wege des nachfolgenden Schleifens sehr leicht wieder abgetragen werden. Durch die zusätzliche Schicht, beispielsweise ein Vlies oder eine Folie, insbesondere aus Kunststoff, kann der aus der Restfeuchtigkeit der imprägnierten Zellulosefaserbahnen entstehende Wasserdampf während des Pressens verbessert über die Oberflächen der Schichtung austreten. Es wird damit der innere Dampfdruck im entstehenden Schichtpressstoff reduziert, womit das beschriebene Platzen der Platte beim Verlassen der Presse vermieden werden kann. Eine wesentliche Reduktion der Presszeit ist damit erreichbar. Es ist bevorzugt, die poröse, wasserdampfdurchlässige Schicht beidseitig vorzusehen, da sonst, besonders bei größeren Plattendicken, asymmetrische Verhältnisse vorliegen, was zum Verziehen der fertigen Platten führen kann. Weiterer Vorteil der wiederholt einsetzbaren porösen, wasserdampfdurchlässigen Schicht ist weiters, dass diese auch wie eine Trennfolie wirkt und damit stets ein leichtes Ablösen des Pressgutes beim Pressenaustritt bzw. Öffnen der Presse bewirkt. Auch wird eine mögliche Verschmutzung der Pressbleche vermieden.

Neben der hohen Wirtschaftlichkeit aufgrund der verringerten Presszeit, ergeben sich durch das 2-stufige Herstellverfahren auch wesentliche logistische Vorteile. So ist es nun möglich, Grundplatten auf Vorrat zu produzieren und diese dann auftragsbezogen zu beschichten und/oder zuzuschneiden. Da die Beschichtung nicht mehr an die überaus langen Presszeiten zur Herstellung der Grundplatte gebunden ist und somit vergleichsweise schnelle Beschichtungsmethoden eingesetzt werden können, lassen sich bisher zu veranschlagende Lieferzeiten wesentlich unterbieten. Eine just-in-time-Lieferung ist so vergleichsweise einfach zu bewerkstelligen.

Das Verfahren kann sowohl mit Hilfe von Taktpressen als auch mit kontinuierlich arbeitenden Pressen durchgeführt werden.

Es ist bekannt, zur Herstellung von Schichtstoffplatten taktweise arbeitende Mehretagenpressen einzusetzen. Bei diesen werden immer eine Mehrzahl von Schichtungen mit dazwischen liegenden Pressblechen in einem Presstakt verpresst. Übliche Presszeiten liegen hier im Bereich von 100 Minuten. Aufwändig ist dabei aber neben der sehr hohen Presszeit auch das Aufstapeln der verschiedenen Schichtungen und die Bereitstellung einer Mehrzahl von Pressblechen. Der Einsatz von Taktpressen ist nach dem Stand der Technik die einzige Möglichkeit, höhere Plattendicken zu erzielen. Kontinuierliche Pressverfahren, hier in der Regel isobare Doppelbandpressen, sind aufgrund der damit zur Verfügung stehenden, verhältnismäßig geringen Presszeit, auf Plattendicken von maximal 1,2 mm beschränkt.

Nach dem erfindungsgemäßen Verfahren, das erhöhte Presstemperaturen zulässt, verringern sich die Presszeiten allerdings, sodass die Herstellung eines Schichtpressstoffes mit einer Dicke größer 1,2 mm im kontinuierlichen Pressverfahren ermöglicht wird. Durch die nachträgliche Möglichkeit der separaten Oberflächenbehandlung ist es nach dem erfindungsgemäßen Verfahren nicht erforderlich, eine isobare Doppelbandpresse einzusetzen, was bei der herkömmlichen Schichtpressstoffherstellung schon der Fall ist, um eine hochwertige, geschlossene Laminatoberfläche zu erzielen. Lokale Unterschiede im Pressdruck, wie sie im Unterschied zu isochoren Pressen bei isobaren Pressen eben nicht auftreten, würden zu ungewünschter Schleierbildung und unregelmäßigem Glanzgrad führen. Da aber nach vorliegender Erfindung die Beschichtung in einem separaten Schritt erfolgt und zudem noch eine spezifische Vorbehandlung wie Schleifen möglich ist, kann erstmals eine isochore Doppelbandpresse zur Herstellung von Schichtpressstoffen eingesetzt werden. Diese ermöglicht eine vielfache Fressenlänge, womit die erforderliche Presszeit auch bei Plattendicken von über 5, 12 oder sogar 18 mm gewährleistet werden kann.

Ein zusätzlicher Vorteil beim Einsatz einer isochoren Doppelbandpresse mit einer Länge von zumindest 10 m, bevorzugt über 20 m, besonders bevorzugt über 25 m, liegt in der variablen Temperaturführung. So ist es bei diesem Pressentyp möglich, in unterschiedlichen Zonen unterschiedliche Presstemperaturen vorzusehen. Wird nun am Beginn der Presse die Schichtung mit einer hohen Temperatur beaufschlagt, die dann gegen Ende der Presse reduziert wird, ergibt sich schon ein gewisser Rückkühleffekt, der den inneren Dampfdruck in der herzustellenden Platte reduziert und so wiederum die Gefahr der Plattenplatzer, dem bestimmenden Kriterium für die Presszeit, reduziert. Es ergibt sich damit eine weitere Möglichkeit, die erforderliche Presszeit zur Herstellung einer Schichtstoffplatte zu reduzieren.

Durch den Umstand, dass nach dem erfindungsgemäßen Verfahren erstmals Schichtstoffplatten durch kontinuierlich arbeitende Doppelbandpressen hergestellt werden können, sind diese erstmalig in theoretisch unendlicher Länge verfügbar. Durch die wahlweise Ablängung des hergestellten Plattenstranges nach der Doppelbandpresse können erstmalig Platten mit einer Dicke von 2 mm und mehr in beinahe beliebiger Länge hergestellt werden. Eine Beschränkung ergibt sich lediglich durch die örtlichen Platzverhältnisse bzw. die gegebenen Transportmöglichkeiten. Schichtstoffplatten mit einer Länge über 5 m, bevorzugt über 8 m, besonders bevorzugt mit über 10 m Länge, lassen sich erstmalig herstellen.

Durch die einfache Möglichkeit, die Platten auf die genannten Maße abzulängen, sind aber auch Zuschnitte mit vergleichsweise wesentlich verringertem Verschnitt möglich, da die nach der Presse abgelängten großformatigen Platten bereits in Hinblick auf das fertige Zuschnittmaß einer später zuzuschneidenden Platte gewählt werden können. Es ergibt sich damit eine hervorragende Formatflexibilität. Bei Taktpressen liegt diese nicht vor, da hier durch die fixe Größe der Pressenflächen das herstellbare Plattenmaß vorgegeben ist.

Wie ausgeführt wird angestrebt, die Presstemperatur möglichst hoch zu wählen, um die Presszezt zu reduzieren. Als günstig haben sich Temperaturen über 155°C, bevorzugt über 185°C, besonders bevorzugt über 205°C erwiesen.

Durch die erhöhten Presstemperaturen ergeben sich notwendigerweise auch erhöhte Pressdrücke. So haben sich gegenüber den nach herkömmlichen Verfahren üblichen Pressdrücken von etwa 8 bis 10 MPa solche von mindestens 15 MPa, bevorzugt von mindestens 19 MPa, besonders bevorzugt von mindestens 23 MPa als günstig erwiesen.

Wie ausgeführt ist durch den separaten Fertigungsschritt des Beschichtens im Unterschied zur Schichtpressstoffherstellung nach dem Stand der Technik keine Beschränkung auf die Applikation eines mit Melaminharz getränkten Dekorpapiers erforderlich. Vielmehr können die 2-stufig hergestellten Schichtstoffplatten auch lackiert, bedruckt, pulverbeschichtet oder auch mit sonstigen Dekormaterialien wie Holz- oder Steinfurnier, Dekor- oder Metallfolie oder natürlich auch einem dekorativen Schichtstoff versehen werden. Daneben steht aber auch die Möglichkeit einer Verpressung mit einem imprägnierten Dekorpapier zur Verfügung. Vergleichsweise sehr gute Voraussetzungen stehen hinsichtlich der Applikation von Motiven durch digitale Druckverfahren zur Verfügung. Diese haben zwar im Bereich der Compaktplattenherstellung bereits Einzug gehalten, sind aber aufgrund der hohen Hitze, die beim Verpressen erforderlich ist, als problematisch einzustufen, da die für den Digitaldruck eingesetzten Tinten die erforderliche Wärmebeständigkeit nicht oder nur bei übermäßig teurer Zusammensetzung aufweisen.

Eine Vorbehandlung der Grundplatte zur nachfolgenden Beschichtung kann erforderlich sein, ist aber keineswegs zwingend erforderlich. Durchgeführte Beschichtungen mit Dekorfolien von Grundplatten ohne eine Vorbehandlung haben gezeigt, dass bei Einsatz von beispielsweise 1-Komponenten-Reaktivsystemen als Klebstoff befriedigende Verbunde erzielt werden können.

Weiters haben Verpressungen mit Melaminharz imprägnierten Dekorpapieren gezeigt, dass sich mit einer Körnung von 80 geschliffene Trägerplatten mit Einstellungen, wie sie bei der Beschichtung von Holzwerkstoffen üblich sind, gut verpressen lassen. Die erzielte Haftung und deren Beständigkeit erfüllt zumindest die für Innenräume gestellten Anforderungen.
Für die direkte Beschichtung mit Lacken können systembezogene Grundierungen eingesetzt werden um hohe Haftfestigkeiten zu erzielen.

Um elektrisch leitfähige Grundplatten herzustellen, können den Imprägnierharzen auch entsprechende Additive beigefügt werden. Dadurch ist es erstmals auch möglich Schichtstoffplatten mit einer Pulverbeschichtung zu veredeln. Es stehen dem Fachmann dazu verschiedene Additive zur Auswahl. Zumeist basieren diese auf Metallsalzen oder Salzen organischer Säuren.

Gemäß einer Ausgestaltung kann beim Schritt des Beschichtens auch eine Schicht aufgebracht werden, die eine mindestens abschnittweise solartechnische Nutzung der Beschichtung ermöglicht. Damit ist jedwede Nutzbarmachung der solaren Einstrahlung der Sonne mittels der Beschichtung gemeint. Ein Beispiel für die solartechnische Nutzung ist die Photovoltaik mittels Solarzellen. Die vorliegende Erfindung ist aber nicht auf diese Art der solartechnischen Nutzung beschränkt.

Wie zuvor erwähnt wird die Aufgabe auch durch eine entsprechende Schichtstoffplatte gelöst, wobei gemäß einer Ausgestaltung die Grundplatte mindestens eine Zellulosefaserbahn ohne Imprägnierung enthalten kann, die insbesondere eine Außenseite der Grundplatte bildet. Alternativ oder zusätzlich kann auch eine Beschichtung in Form eines Lacks, eines Drucks, einer Pulverbeschichtung, eines Dekormaterials und/oder eines imprägnierten Dekorpapiers vorgesehen sein. Das Dekormaterial kann ein Holz- oder Steinfurnier, eine Dekor- oder Metallfolie oder ein Schichtstoff sein. Das imprägnierte Dekorpapier kann insbesondere mit Melaminharz imprägniert sein.

Auch kann die Beschichtung wie gesagt eine eine zumindest abschnittweise solartechnische Nutzung der Schichtstoffplatte ermöglichende Beschichtung sein. Letztere kann beispielsweise durch Farbstoffsolarzellen gebildet werden. Kernstück der Zellen ist ein organischer Farbstoff, der in nanokristalline Elektroden aus beispielsweise Titandioxid eingebettet ist.

Dieser wandelt das auftreffende Licht in elektrischen Strom um.

Es gibt nun eine Vielzahl von Möglichkeiten, das erfindungsgemäße Verfahren und die erfindungsgemäße Schichtstoffplatte auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung.

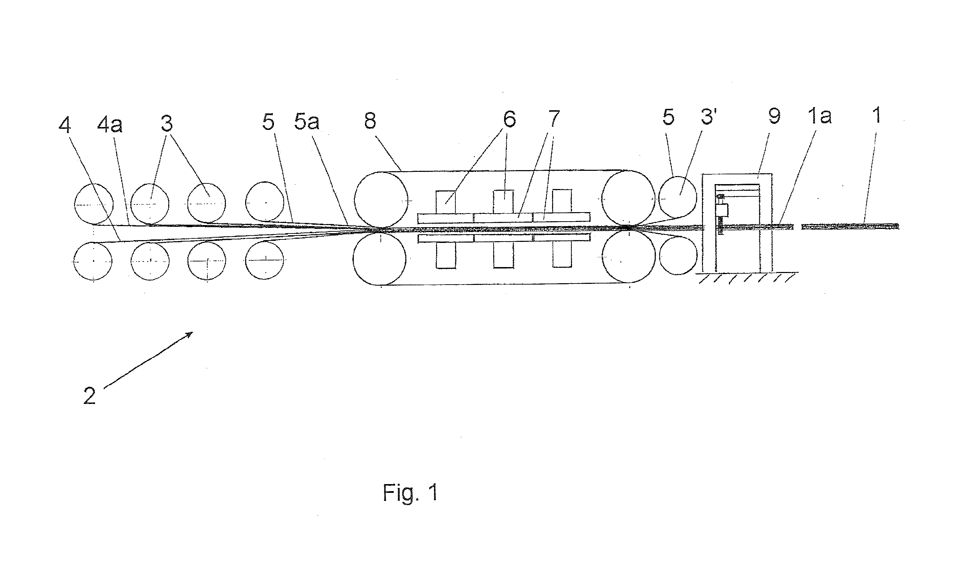

Fig. 1 zeigt schematisch die Herstellung einer Compactplatte (Schichtstoffplatte 1) nach einer möglichen Ausführungsform des erfindungsgemäßen Verfahrens.

Dazu ist hier eine kontinuierlich arbeitende, isochore Doppelbandpresse 2 vorgesehen. Zur Beschickung der Presse 2 sind vor dieser mehrere Rollen 3 von bereits imprägniertem Kraftpapier 4 angeordnet, von denen die Bahnen 4a abgewickelt und der Presse 2 direkt zugeführt werden. Im vorliegenden Fall handelt es sich um mit Phenolharz imprägniertes Kraftpapier 4 mit einem Rohpapiergewicht von 150 g/m² und einem Beharzungsgrad von 67 %. Bei einer Restfeuchte von 7 % entspricht das einem Flächengewicht des imprägnierten Kraftpapiers 4 von 270 g/m². Die oberste und unterste Schicht wird durch eine poröse Lage 5 einer Kunststoffbahn 5a gebildet. Letztere wird nach der Presse 2 wieder von den Plattenoberflächen abgenommen und wieder auf eine Rolle 3' gewickelt, um wiederholt eingesetzt werden zu können. Um höhere Plattendicken zu erreichen, können, um die Anzahl von Abwickelstationen geringer zu halten, auf einer Rolle 3 mehrere Lagen imprägnierter Papierbahnen 4a aufgewickelt sein. Die Presse 2 weist eine wirksame Länge von 22,5 m auf und kann abschnittweise mittels entsprechender Heizmittel 6 auf unterschiedliche Temperaturen aufgeheizt und auch jeweils mittels entsprechender Pressenabschnitte 7 mit unterschiedlichen Pressdrücken beaufschlagt werden. So ist im vorliegenden Fall der Pressdruck in dem ersten (vorderen) der Pressenabschnitte 7 mit 20 MPa gewählt, der dann bis zur Mitte der Presse 2 auf etwa 17 MPa verringert und ab da gehalten wird. Im letzten Viertel der Pressenlänge wird dann nicht mehr der Pressdruck vorgegeben, sondern es wird distanzgesteuert geregelt, also der Abstand der Pressbänder 8 vorgegeben, um die gewünschte Plattendicke möglichst innerhalb kleinster Toleranzen zu erreichen.

Die Vorschubgeschwindigkeit beträgt ca. 0,55 m/min, was einer Presszeit von ca. 41 Minuten entspricht. Bei einer Plattendicke von 9 mm entspricht das einem Pressfaktor, also dem Verhältnis aus Presszeit und Plattendicke, von etwa 4,5 min/mm.

Nach der Presse 2 ist eine Diagonalsäge 9 vorgesehen, die den endlosen Plattenstrang 1a auf die gewünschte Plattenlänge ablängt. Die einzelnen Platten 1 werden dann in einem nachgeordneten (nicht dargestellt) Kühlstern abgekühlt und können dann zwischengelagert werden oder auch direkt der weiteren Verarbeitung zugeführt werden. Wie bei der Herstellung von Holzwerkstoffen ist es sinnvoll, die abgekühlten Platten 1 zu schleifen und anschließend einzulagern. Die jeweils gewünschten Plattendicken können dann auftragsbezogen vom Lager der Beschichtung zugeführt werden.

## Patentansprüche

1. Zweistufiges Verfahren zur Herstellung einer Schichtstoffplatte, bei dem eine Grundplatte und eine Beschichtung separat hergestellt werden, wobei nacheinander die folgenden Schritte durchgeführt werden:
- Bereitstellen einer Mehrzahl von mit einer Imprägnierung versehenen, nicht miteinander verpressten Zellulosefaserbahnen,
- Bilden einer Schichtung,
- Einfahren der Schichtung in eine Heißpresse,
- Verpressung der Schichtung unter Erhöhen des Drucks und der Temperatur zu einer Grundplatte mit einer Dicke von 2 mm und mehr,
- Ausfahren der Grundplatte aus der Heißpresse und
- Beschichten der Grundplatte,
**dadurch gekennzeichnet, dass** die Schichtung gebildet wird, indem die mit der Imprägnierung versehenen Zellulosefaserbahnen übereinander angeordnet werden, wobei die Schichtung aus den Zellulosefaserbahnen in die Heißpresse eingefahren und unter Erhöhen des Drucks und der Temperatur zu der Grundplatte mit der Dicke von 2 mm und mehr verpresst wird, wobei nach dem Beschichten eine Compactplatte gemäß Europäischer Norm EN 438 erhalten wird.

2. Verfahren nach Anspruch 1, **dadurch gekennzeichnet, dass** die Zellulosefaserbahnen der Schichtung alle mit derselben Imprägnierung versehen werden.

3. Verfahren nach Anspruch 1 oder 2, **dadurch gekennzeichnet, dass** die Schichtung mit mindestens einer Zellulosefaserbahn ohne Imprägnierung versehen wird, wobei insbesondere die Schichtung auf einer Seite und/oder auf beiden Seiten mit einer äußeren Lage versehen wird, die von mindestens einer Zellulosefaserbahn ohne Imprägnierung gebildet wird.

4. Verfahren nach einem der vorangehenden Ansprüche, **dadurch gekennzeichnet, dass** eine oder mehrere der mit der Imprägnierung versehenen Zellulosefaserbahnen mit einer Imprägnierung versehen werden, die elektrisch leitfähige Additive, insbesondere Salze organischer Säuren, vorzugsweise Metallsalze, enthält.

5. Verfahren nach einem der vorangehenden Ansprüche, **dadurch gekennzeichnet, dass** zwischen dem Schritt des Ausfahrens der Grundplatte aus der Heißpresse und dem Schritt des Beschichtens der Grundplatte ein Schritt des Vorbehandelns der Grundplatte durchgeführt wird, wobei das Vorbehandeln insbesondere ein Schleifen der Grundplatte, Glätten der Grundplatte, Applizieren von Vorstrichen, Primern und/oder Grundierungen auf die Grundplatte und/oder eine Plasmabehandlung der Oberflächen der Grundplatte umfasst.

6. Verfahren nach einem der vorangehenden Ansprüche, **dadurch gekennzeichnet, dass** im Schritt des Verpressens der Schichtung die Temperatur auf mindestens 155°C, insbesondere mindestens 185°C und vorzugsweise mindestens 205°C erhöht wird, wobei insbesondere die Temperatur während der Presszeit variiert, insbesondere verringert, wird.

7. Verfahren nach einem der vorangehenden Ansprüche, **dadurch gekennzeichnet, dass** im Schritt des Verpressens der Schichtung der Druck auf mindestens 15 MPa, insbesondere mindestens 19 MPa und vorzugweise mindestens 23 MPa erhöht wird, wobei insbesondere der Druck während der Presszeit variiert, insbesondere verringert, wird.

8. Verfahren nach einem der vorangehenden Ansprüche, **dadurch gekennzeichnet, dass** vor dem Schritt des Verpressens eine wasserdampfdurchlässige Schicht benachbart zu einer oder beiden Seiten der Schichtung vorgesehen wird, wobei die wasserdampfdurchlässige Schicht nach dem Schritt des Verpressens von der Grundplatte insbesondere entfernt wird.

9. Verfahren nach Anspruch 8, **dadurch gekennzeichnet, dass** die wasserdampfdurchlässige Schicht eine insbesondere poröse Lage aus einem Vlies oder einer Folie, insbesondere aus einem Kunststoff, ist.

10. Verfahren nach einem der vorangehenden Ansprüche, **dadurch gekennzeichnet, dass** die Heißpresse eine kontinuierlich arbeitende Presse, insbesondere Doppelbandpresse, ist, die insbesondere eine Pressenlänge von mindestens 10 m, bevorzugt mindestens 20 m, besonders bevorzugt mindestens 25 m, aufweist.

11. Verfahren nach einem der vorangehenden Ansprüche, **dadurch gekennzeichnet, dass** der Schritt des Beschichtens ein Lackieren, ein Bedrucken, ein Pulverbeschichten, ein Applizieren von einem Dekormaterial, insbesondere einem Holz- oder Steinfurnier, einer Dekor- oder Metallfolie oder einem Schichtstoff, und/oder ein Verpressen mit einem imprägnierten, insbesondere mit Melaminharz imprägnierten, Dekorpapier umfasst, wobei beim Schritt des Beschichtens insbesondere eine Schicht aufgebracht wird, die eine mindestens abschnittweise solartechnische Nutzung der Beschichtung ermöglicht.

12. Compactplatte gemäß Europäischer Norm EN 438, hergestellt durch ein Verfahren nach einem der vorangehenden Ansprüche, enthaltend
- eine Grundplatte einer Dicke von 2 mm und mehr mit einer Mehrzahl von mit einer Imprägnierung versehenen, übereinander angeordneten und unter erhöhtem Druck und erhöhter Temperatur verpressten Zellulosefaserbahnen und
- eine zumindest auf einer Seite der Grundplatte separat aufgebrachte Beschichtung.

13. Compactplatte nach Anspruch 12, **dadurch gekennzeichnet, dass** die Grundplatte mindestens eine Zellulosefaserbahn ohne Imprägnierung enthält, die insbesondere eine Außenseite der Grundplatte bildet.

14. Compactplatte nach Anspruch 12 oder 13, **dadurch gekennzeichnet, dass** die Dicke der Compactplatte mindestens 5 mm, vorzugsweise mindestens 12 mm und besonders bevorzugt mindestens 18mm, und/oder die Länge der Compactplatte mindestens 5 m, insbesondere mindestens 8 m und vorzugsweise mindestens 10 m beträgt.

15. Compactplatte nach einem der Ansprüche 12 bis 14, **dadurch gekennzeichnet, dass** die Beschichtung ein Lack, ein Druck, eine Pulverbeschichtung, ein Dekormaterial, insbesondere ein Holz- oder Steinfurnier, eine Dekor- oder Metallfolie oder ein Schichtstoff, und/oder ein imprägniertes, insbesondere mit Melaminharz imprägniertes, Dekorpapier ist.

16. Compactplatte nach einem der Ansprüche 12 bis 15, **dadurch gekennzeichnet, dass** die Beschichtung eine eine zumindest abschnittweise solartechnische Nutzung der Compactplatte ermöglichende Beschichtung ist und vorzugsweise Farbstoffsolarzellen aufweist.

## Claims

1. A two-stage method for the manufacture of a laminated panel, in which a base panel and a coating layer are manufactured separately, wherein the following steps are executed in sequence:
- preparation of a plurality of cellulose fibre webs, provided with an impregnation, and not pressed together,
- formation of a layered arrangement,
- traversing of the layered arrangement into a hot press,
- application of pressure to the layered arrangement with increasing pressure and temperature to form a base panel with a thickness of 2 mm and more,
- traversing of the base panel out of the hot press, and
- coating of the base panel,
**characterised in that**,
the layered arrangement is formed **in that** the cellulose fibre webs provided with the impregnation are arranged one above another, wherein the layered arrangement formed from the cellulose fibre webs is traversed into the hot press, and with increasing pressure and temperature is pressed to form the base panel with the thickness of 2 mm and more, wherein after the coating process a compact panel in accordance with European Standard EN 438 is obtained.

2. The method in accordance with Claim 1, **characterised in that**, the cellulose fibre webs of the layered arrangement are all provided with the same impregnation.

3. The method in accordance with Claim 1 or 2, **characterised in that**, the layered arrangement is provided with at least one cellulose fibre web without impregnation, wherein in particular on one face, and/or on both faces, the layered arrangement is provided with an outer lay, which is formed from at least one cellulose fibre web without impregnation.

4. The method in accordance with one of the preceding claims, **characterised in that**, one or a plurality of the cellulose fibre webs containing the impregnation are provided with an impregnation, which contains electrically conductive additives, in particular salts of organic acids, preferably metal salts.

5. The method in accordance with one of the preceding claims, **characterised in that**, between the step of traversing the base panel out of the hot press and the step of coating the base panel a step of pre-treatment of the base panel is executed, wherein the pre-treatment in particular comprises grinding of the base panel, smoothing of the base panel, application of initial coatings, primers and/or undercoats onto the base panel, and/or a plasma treatment of the surfaces of the base panel.

6. The method in accordance with one of the preceding claims, **characterised in that**, in the step of application of pressure to the layered arrangement the temperature is increased to at least 155°C, in particular to at least 185°C, and preferably to at least 205°C, wherein in particular the temperature is varied, in particular reduced, during the pressing time.

7. The method in accordance with one of the preceding claims, **characterised in that**, in the step of application of pressure to the layered arrangement the pressure is increased to at least 15 MPa, in particular to at least 19 MPa, and preferably to at least 23 MPa, wherein in particular the pressure is varied, in particular reduced, during the pressing time.

8. The method in accordance with one of the preceding claims, **characterised in that**, before the step of application of pressure a layer permeable to water vapour is provided adjoining one or both faces of the layered arrangement, wherein after the step of application of pressure the layer permeable to water vapour is in particular removed from the base panel.

9. The method in accordance with Claim 8, **characterised in that**, the layer permeable to water vapour is an in particular porous layer of a non-woven material or a foil, in particular of a plastic.

10. The method in accordance with one of the preceding claims, **characterised in that**, the hot press is a continuously operating press, in particular a double-belt press, which in particular has a press length of at least 10 m, preferably of at least 20 m, particularly preferably of at least 25 m.

11. The method in accordance with one of the preceding claims, **characterised in that**, the step of coating comprises a painting process, a printing process, a powder coating process, an application of a decorative material, in particular a wood or stone veneer, a decorative or metal foil or a laminate, and/or a pressing process with an impregnated decorative paper, in particular one impregnated with a melamine resin, wherein in the step of coating, a layer is in particular applied, which enables solar technological utilisation of the coating layer on at least some sections.

12. A compact panel in accordance with European Standard EN 438, manufactured by means of a method in accordance with one of the preceding claims, containing
- a base panel of a thickness of 2 mm and more with a plurality of cellulose fibre webs provided with an impregnation, arranged one above another and pressed under increased pressure and increased temperature, and
- a coating layer applied separately onto at least one face of the base panel.

13. The compact panel in accordance with Claim 12, **characterised in that**, the base panel contains at least one cellulose fibre web without impregnation, which in particular forms an outer face of the base panel.

14. The compact panel in accordance with Claim 12 or 13, **characterised in that**, the thickness of the compact panel is at least 5 mm, preferably at least 12 mm, and particularly preferably at least 18 mm, and/or the length of the compact panel is at least 5 m, in particular at least 8 m, and preferably at least 10 m.

15. The compact panel in accordance with one of the Claims 12 to 14, **characterised in that**, the coating layer is a paint, a print, a powder coating, a decorative material, in particular a wood or stone veneer, a decorative or metal foil or a laminate, and/or an impregnated decorative paper, in particular one impregnated with a melamine resin.

16. The compact panel in accordance with one of the Claims 12 to 15, **characterised in that**, the coating layer is a coating layer enabling solar technological utilisation of the compact panel on at least some sections, and preferably has dye solar cells.

## Revendications

1. Procédé à deux étapes pour la fabrication d'une plaque en matériau stratifié, dans lequel une plaque de base et un revêtement sont fabriqués séparément, les étapes suivantes étant réalisées successivement :
- prévision d'une pluralité de bandes de fibres de cellulose pourvues d'une imprégnation et non comprimées ensemble,
- formation d'un feuilletage,
- introduction du feuilletage dans une presse à chaud,
- pressage du feuilletage en augmentant la pression et la température pour obtenir une plaque de base ayant une épaisseur de 2 mm et plus,
- extraction de la plaque de base de la presse à chaud et
- revêtement de la plaque de base,
**caractérisé en ce que** le feuilletage est constitué en disposant les bandes de fibres de cellulose pourvues de l'imprégnation les unes sur les autres, le feuilletage fait des bandes de fibres de cellulose étant introduit dans la presse à chaud et comprimé en augmentant la pression et la température pour obtenir la plaque de base d'une épaisseur de 2 mm et plus, une plaque compacte conforme à la norme européenne EN 438 étant obtenue après le revêtement.

2. Procédé selon la revendication 1, **caractérisé en ce que** les bandes de fibres de cellulose du feuilletage sont toutes pourvues de la même imprégnation.

3. Procédé selon la revendication 1 ou 2, **caractérisé en ce que** le feuilletage est pourvu d'au moins une bande de fibres de cellule sans imprégnation, le feuilletage est en particulier pourvu sur une face et/ou sur les deux faces d'une couche extérieure qui est constituée par au moins une bande de fibres de cellulose sans imprégnation.

4. Procédé selon une des revendications précédentes, **caractérisé en ce qu'**une ou plusieurs des bandes de fibres de cellulose pourvues de l'imprégnation sont pourvues d'une imprégnation qui contient des additifs conducteurs électriques, en particulier des sels d'acides organiques, de préférence des sels métalliques.

5. Procédé selon une des revendications précédentes, **caractérisé en ce que**, entre l'étape de l'extraction de la plaque de base de la presse à chaud et l'étape de revêtement de la plaque de base, on réalise une étape de prétraitement de la plaque de base, le prétraitement comprenant en particulier un polissage de la plaque de base, un lissage de la plaque de base, l'application d'apprêts, de primaires, et/ou de fonds sur la plaque de base et/ou un traitement au plasma des surfaces de la plaque de base.

6. Procédé selon une des revendications précédentes, **caractérisé en ce que**, dans l'étape de pressage du feuilletage, la température est augmentée jusqu'à au moins 155 °C, en particulier au moins 185 °C et de préférence au moins 205 °C, la température étant en particulier variée, en particulier réduite, pendant le temps de pressage.

7. Procédé selon une des revendications précédentes, **caractérisé en ce que**, dans l'étape de pressage du feuilletage, la pression est augmentée à au moins 15 MPa, en particulier au moins 19 MPa et de préférence au moins 23 MPa, la pression étant en particulier variée, en particulier réduite, pendant le temps de pressage.

8. Procédé selon une des revendications précédentes, **caractérisé en ce que**, avant l'étape de pressage, il est prévu une couche perméable à la vapeur d'eau à proximité d'une ou des deux faces du feuilletage, la couche perméable à la vapeur d'eau étant en particulier enlevée après l'étape de pressage de la plaque de base.

9. Procédé selon la revendication 8, **caractérisé en ce que** la couche perméable à la vapeur d'eau est une épaisseur en particulier poreuse constituée d'un non-tissé ou d'un film, en particulier d'une matière plastique.

10. Procédé selon une des revendications précédentes, **caractérisé en ce que** la presse à chaud est une presse fonctionnant en continu, en particulier une presse à double bande, qui présente en particulier une longueur de presse d'au moins 10 m, de préférence d'au moins 20 m, très préférentiellement d'au moins 25 m.

11. Procédé selon une des revendications précédentes, **caractérisé en ce que** l'étape de revêtement comprend une peinture, une impression, un revêtement à la poudre, une application d'un matériau décoratif, en particulier un placage en bois ou en pierre, d'un film décoratif ou métallique ou d'un matériau stratifié, et/ou un pressage avec un papier décoratif imprégné, en particulier imprégné de résine de mélamine, sachant que, lors de l'étape de revêtement, on applique en particulier une couche qui permet du moins par sections une utilisation en technologie solaire du revêtement.

12. Plaque compacte selon la norme européenne EN 438, fabriquée par un procédé selon une des revendications précédentes, comportant
- une plaque de base ayant une épaisseur de 2 mm et plus et comportant une pluralité de bandes de fibres de cellulose pourvues d'une imprégnation, disposées les unes sur les autres et compressées sous une pression accrue et à température accrue et
- un revêtement appliqué séparément au moins sur une face de la plaque de base.

13. Plaque compacte selon la revendication 12, **caractérisée en ce que** la plaque de base comprend au moins une bande de fibres de cellulose sans imprégnation, qui constitue en particulier une face extérieure de la plaque de base.

14. Plaque compacte selon la revendication 12 ou 13, **caractérisée en ce que** l'épaisseur de la plaque compacte s'élève à au moins 5 mm, de préférence au moins 12 mm et très préférentiellement au moins 18 mm, et/ou la longueur de la plaque compacte s'élève à au moins 5 m, en particulier au moins 8 m et préférentiellement au moins 10 m.

15. Plaque compacte selon une des revendications précédentes 12 à 14, **caractérisée en ce que** le revêtement est une peinture, une impression, un revêtement à la poudre, un matériau décoratif, en particulier un placage en bois ou en pierre, un film décoratif ou métallique ou un matériau stratifié, et/ou un papier décoratif imprégné, en particulier imprégné de résine de mélamine.

16. Plaque compacte selon une des revendications précédentes 12 à 15, **caractérisée en ce que** le revêtement est un revêtement permettant une utilisation du moins par sections en technologie solaire de la plaque compacte et présente de préférence des cellules solaires à colorants.
